# EUROPEAN PATENT SPECIFICATION

(11) **EP 1 488 704 B1**
(45) Date of publication and mention of the grant of the patent: **16.05.2007**
(21) Application number: 04253072.5
(22) Date of filing: 25.05.2004
(51) Int. Cl.: A23L 1/00, A21D 13/08, A23C 19/09

(54) **Food products having moisture release system for maintaining texture during shelf life**
Lebensmittelprodukte mit einem Feuchtigkeitsfreisetzungsystem zur Aufrechterhaltung der Textur während ihrer Lagerung.
Produits alimentaires comprenant un système de libération d'humidité pour maintenir leur texture au stockage

(30) Priority: 16.06.2003 US 463178
(43) Date of publication of application: 22.12.2004
(73) Proprietor: KRAFT FOODS HOLDINGS, INC., Northfield, Illinois 60093 (US)
(72) Inventor: Gaonkar, Anilkumar Ganapati, Buffale Grove Illinois 60089 (US); Chen, Wei-Zhi, Northfiled Illinois 60093 (US); Miklus, Michael B., Suffern, NY 10901 (US); Herbst, Laura, Buffalo Grove Illinois 60089 (US)
(74) Representative: Smaggasgale, Gillian Helen

(56) References cited:
- GB-A- 2 335 133
- US-A- 4 293 572
- US-A- 4 915 971

## Description

### FIELD OF THE INVENTION

The present invention relates generally to multi-component food products that include diverse food components having differing water activities, and to a moisture release system for such food products. In these food products, an edible moisture supply layer is provided in contact with a first food component to which it releases moisture during storage of the food product effective to inhibit the first food component from going stale. A separate edible moisture barrier is interposed between the moisture supply layer and a second food component having a higher water activity than that of the first food component effective to reduce moisture loss in the second food component that otherwise would occur from migration of moisture between the food components having different water activities. Multi-component food products including diverse food components having differing water activities are thereby obtained that have increased shelf lives.

### BACKGROUND OF THE INVENTION

For many food products, moisture levels must be maintained if the product is to exhibit optimum organoleptic properties, quality, and taste. Moisture migration in finished food products can seriously compromise quality, stability, and organoleptic properties. In addition, many chemical and enzymatic deteriorative reactions proceed at rates partially governed by the moisture content of foods. Excessive rates of these reactions can promote deleterious changes in the flavor, color, texture, and nutritive value of food products. In multi-component food products, particularly those having components with different moisture contents and water activities, e.g., prepackaged cheese and crackers, or prepackaged bagel and cream cheese products, moisture can migrate between adjacent components, altering the component's characteristics and organoleptic properties. In addition to compromising the quality of finished food products, moisture migration can hinder production and distribution of food products. Therefore, for example, the cream cheese in a bagel and cream cheese product could dry out while, at the same time, the bagel becomes stale. Staling of bread is manifested in textural, visual and flavor changes, and the net result is a strong negative correlation between staling and consumer acceptance.

One method to prevent moisture migration in foods involves coating one or more surfaces of the food product with an edible moisture barrier. Such barriers should have a low moisture permeability in order to prevent the migration of moisture between areas of differing water activities. In addition, the barrier should cover the food surface completely, including crevices, and adhere well to the food product surface. The moisture barrier should be sufficiently strong, soft, and flexible to form a continuous surface that will not crack upon handling, yet can be easily penetrated during consumption. In addition, the barrier film's organoleptic properties of taste, aftertaste, and mouthfeel should be imperceptible so that the consumer is not aware of the barrier when the food product is consumed. Finally, the moisture barrier should be easy to manufacture and easy to use.

Because lipids, such as, for example, oils, fats, and waxes, are composed of lipophilic or water insoluble molecules capable of forming a water impervious structure, they have been investigated for use in moisture barrier films. With respect to oleaginous materials (i.e., fats, oils, sucrose polyesters, and the like) and/or other film forming lipids, it has been shown that the barrier is not effective unless an undesirably thick coating is used. Such film forming lipids also tend to melt and run under normal baking conditions and, thus, lose film integrity and barrier effectiveness. Wax barriers have disadvantages as moisture barriers because they tend to crack upon handling or with changes in temperatures. Accordingly, many of the barriers in the art use a water-impermeable lipid in association with hydrocolloids or polysaccharides such as alginate, pectin, carrageenan, cellulose derivatives, starch, starch hydrolysates, and/or gelatin to form gel structures or cross-linked semi-rigid matrixes to entrap and/or immobilize the nonaqueous material. In many cases these components are formed as bilayer films. These bilayer films may be precast and applied to a food surface as a self-supporting film with the lipid layer oriented toward the component with highest water activity. Illustrations of such bilayer films are described for example, U.S. Pat. No. 4,671,963, U.S. Pat. No. 4,880,646, U.S. Pat. No. 4,915,971, and U.S. Pat. No. 5,130,151.

There are, however, a number of drawbacks associated with the prior moisture barriers. The hydrocolloids themselves are hydrophilic and/or water-soluble and thus tend to absorb water with time. The absorption of water by the hydrophilic material in moisture barrier is greatly accelerated while the film is directly in contact with foods having a water activity (A_{w}) above 0.75. The water absorption rate of the hydrophilic material is further accelerated at elevated temperature, thereby rendering the barrier ineffective for applications wherein the moisture barrier will be exposed to heat (e.g., baking applications). In addition, some hydrocolloids tend to make the moisture barriers fairly stiff, requiring the addition of a hydrophilic plasticizer (e.g., polyol) to increase flexibility. These plasticizers are often strong moisture binders themselves thus promoting moisture migration into the moisture barriers and decreased structural stability of the moisture barriers. Furthermore, the texture and the required thickness of some of these moisture barriers may make their presence perceptible and objectionable when the product is consumed.

Another problem in dual texture products, such as a bagel and cream cheese sandwich, is that both the cream cheese and the bagel lose moisture and harden over time. The moisture loss in the cream cheese can be reduced using a moisture barrier coating on the cream cheese. Some moisture loss from the cream cheese is prevented by the moisture barrier, but the bagel tends to dry out more rapidly. In that situation, the bagel texture can be preserved for a longer time by supplying moisture over time such as by spraying a water mist on the exterior bagel surface. However, spraying of water on the bagel in sufficient amounts to combat the staling problem tends to make the bagel soggy.

U.S. Pat. No. 6,039,988 describes a laminated baked product, such as used in an ice cream sandwich cookie that maintains its crispness after being contacted by ice cream, in which migration of moisture from the ice cream into the cookie is prevented by using an intervening edible oil layer and a fat absorbing membrane, such as rice or potato starch paper. As indicated above, the use of an intervening water barrier may protect and stabilize the moisture content of a filling, but stabilization of the moisture content of outer lower water activity layers remains a concern and problem.

U.S. Pat. No. 5,573,793 describes a food composition containing a cookie and a filling containing a fermented diary product, in which the filling is in the form of a water-in-oil emulsion and controlled migration of water occurs from the filling to the cookie under temperatures of 4 to 6°C, which reduces the water activity and moisture content of the filling as the cookie absorbs its water. However, significant changes in the moisture content of fillings are undesirable during the shelf life of a multilayered food composition, as the organoleptic properties of the filling likewise would be subject to significant variation.

U.S. Pat. No. 4,847,098 describes dual texture foods including a water-in-oil emulsion used for slowing down migration of a filling component to an outer part, thus extending the shelf life. Reduction of moisture transfer from inner core to outside is reported to keep the filling from getting hard and the outside from getting soggy.

JP Publ. Pat. Appln. No. 60224445 describes a cake resistant to wetting by using a water-in-oil type emulsion, in which moisture transfer into the cake is reduced.

U.S. Pat. No. 6,146,672 describes a water-in-oil emulsion-based filling that prolongs the shelf life of dough by providing shelf stable protective barrier, which results in a reduction in moisture transfer into the dough.

U.S. Pat. No. 4,293,572 describes a water-in-oil emulsion that inhibits moisture migration from inside to outside of a multicomponent food product.

U.S. Pat. No. 5,472,724 describes a process for making a bakery product in which the fresh baked product is quick chilled, such as cryogenic chilling to provide a product having significant reduction in staling when subsequently maintained at ambient conditions.

U.S. Pat. No. 5,795,603 describes a cream cheese filled bagel, but does not provide an extended refrigerated shelf life product.

U.S. Pat. No. 6,472,006 describes an oven-stable edible moisture barrier comprising co-micromilled lower and higher melting oils for food products useful for preventing moisture migration within a multi-component food product between components having different water activities.

It would be desirable to provide a multi-component food product that can prevent or retard staling problems in a food component that is otherwise highly vulnerable to staling during the shelf life of the food product that is used in combination with a different type of food component having a higher water activity, while also preventing moisture migration out of the food component having a higher water activity. The present invention provides such a multi-component food product meeting these and other needs.

### SUMMARY OF THE INVENTION

The present invention provides mufti-component food product having enhanced shelf life in which the food product includes diverse food components having differing water activities. In these multi-component food products, an edible moisture supply layer is provided in contact with a first food component to which it releases moisture to slow down the rate at which the first food component goes stale during storage and thereby increasing its shelf life. A separate edible moisture barrier is interposed between the moisture supply layer and a second food component having a higher water activity than that of the first food component, wherein the separate edible moisture barrier is effective to reduce moisture loss in the second food component from migration of moisture that otherwise would tend to occur between the food components having different water activities.

Thus according to the present invention there is provided
a food product comprising a high water activity food component, a low water activity food component, and a controlled moisture release system, wherein the moisture release system comprises:
(a) a controlled moisture supply layer comprising an edible emulsion layer having water as an internal phase, wherein the controlled moisture supply layer contacts the low water activity food component, and
(b) an edible moisture barrier layer, wherein the edible moisture barrier contacts the high water activity food component;
wherein the controlled moisture supply layer allows migration of moisture into the low water activity food component during storage of the food product, thereby reducing staling of the low water activity food component, and wherein the edible moisture barrier layer reduces migration of moisture from the high water activity food component, whereby the moisture release system provides an extended shelf life for the food product relative to a similar food product without the moisture release system.

In one preferred embodiment, the present invention provides such a food product including an internal moisture release system having dual moisture delivery/moisture migration control functionality by providing an integral composite substructure interposed between diverse food components having different water activities. For instance, the moisture release system is provided between an internal filling and exterior shell layers effective to keep the shell layers soft and fresh (i.e., they are less stale), while holding and preserving the original moistness of the filling, over several weeks or even months of shelf life. To provide this dual functionality, the moisture supply layer is provided in contact with a shell layer while the moisture barrier is provided in contact with the internal filling.

More particularly, the above-indicated moisture supply layer of the internal moisture release system preferably is an emulsion layer in which water is the internal phase. Such an emulsion layer can be selected from an oil-in-water emulsion or an oil-in-water-in-oil emulsion. The emulsion layer acts as a controlled moisture release system for the food component of the multi-component food product that is more vulnerable to going stale due to its relatively lower initial moisture content, surface exposure, and so forth.

The food product of the present invention includes different or diverse components having significantly differing water activities from each other such that if the two components were placed in adjoining contact they would experience significant water migration between the two components. In one embodiment, the water activity of the food component having the higher water activity is at least about 0.03 or more greater than the water activity of the other food component.

Multi-component food products that can advantageously include and use the dual moisture delivery/moisture migration control substructure according to this invention include, for example, a bagel and cream cheese sandwich, a cheese and cracker combination, and so forth. In the instance of a bagel and cream cheese sandwich, for example, the moisture content of the food component having lower water activity (i.e., the bagel) can increase at least 15%, particularly about 15% to about 40%, after about four months of storage of the food product at about 4°C. Meanwhile, the moisture content of the cream cheese filling remains relatively constant or is not reduced to a level impacting its freshness over the same period of time, such that the organoleptic properties of both the filling and bagel remain fresh and savory even after several months of refrigerated storage.

For purposes of shelf life assessment herein, "refrigerated storage" generally means storage at about 4°C. It will be appreciated that the food products of this invention can be stored at other temperatures as a practical matter. "State", "staling", and like terms, as used herein, refer to a noticeable deterioration in one or more organoleptic properties of a food component selected from texture, taste, color, and/or odor. For example, in the instance of a food component having a bread component, such as a bagel and cream cheese sandwich, staling can be measured at least in terms of increasing texture firmness and/or hardness of the bagel component for purposes herein. A cream filling component that deteriorates is noticeably less moist, and/or crumbly in texture, and/or has less palatable taste, color or odor. "Fresh" means organoleptic properties of a food product as associated with it when freshly made.

### BRIEF DESCRIPTION OF THE DRAWINGS

Other features and advantages of the present invention will become apparent from the following detail description of preferred embodiments of the invention with reference to the drawings, in which:
FIG. 1 illustrates a food product of an embodiment of the present invention.
FIG. 2 is a graph illustrating the moisture contents of bagel components over a portion of the shelf life period of a food product of an embodiment of the present invention and also comparison and control food products.
FIG. 3 is a graph illustrating the moisture contents of cream cheese components over a portion of the shelf life period of a food product of an embodiment of the present invention and also comparison and control food products.
FIG. 4 is a graph illustrating the sensory analysis of texture (firmness) of bagel components over the shelf life period of a food product of an embodiment of the present invention and also comparison and control food products.
FIG. 5 illustrates a food product of another embodiment of the present invention.
FIG. 6 illustrates a food product of yet another embodiment of the present invention.

Skilled artisans will appreciate that elements in the figures are illustrated for simplicity and clarity and have not necessarily been drawn to scale. For example, the dimensions of some of the features, such as film and layer thicknesses, shown in the figures have been enlarged relative to other elements to facilitate the discussion herein of the embodiments of the invention. Also, features in the various figures identified with the same reference numerals represent like features, unless indicated otherwise.

### DETAILED DESCRIPTION OF THE INVENTION

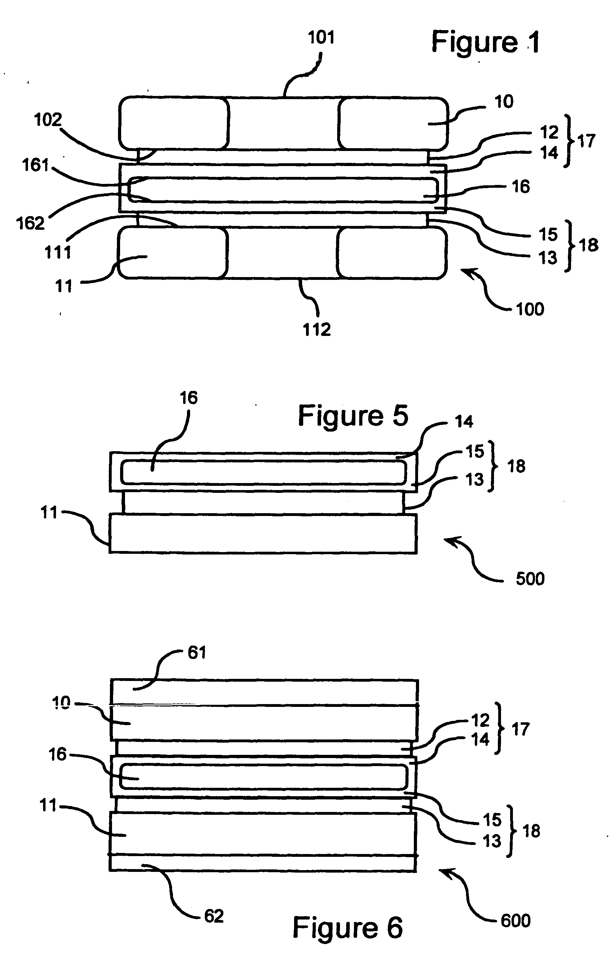

FIG. **1** generally illustrates a food product **100** representing an embodiment of the present invention that include an integrated moisture release system **17** (and separately **18**) including a moisture supply reservoir constituent **12** (**13**) for supplying moisture to an exterior component **10 (11)** to reducing staling, and a separate moisture barrier constituent **14** (**15**) to preserve the moisture content of a filling 16.

As a non-limiting illustration, the food product **100** is a bagel and cream cheese sandwich. A bagel is sliced into two halves **10** and **11.** The cream cheese filling **16** is sandwiched between the two halves **10** and **11**, but not in direct physical contact with them. In this embodiment, a water-in-oil emulsion layer **12** and moisture barrier film **14** are interposed between one side **161** of the cream cheese layer **16** and the inner side **102** of bagel half **10**, and another water-in-oil emulsion layer **13** and another moisture barrier film **15** are interposed between the opposite side **162** of the cream cheese layer **16** and the inner side **111** of bagel half **11.**

As has been demonstrated experimentally, such as described in the examples described herein, the bagel components **10, 11** have a higher moisture content after several months of storage than their original values measured before being brought into contact with the respective water-in-oil emulsion layers **12, 13,** and assembled with other constituents of sandwich **100.** For instance, increases of at least about 15% in moisture content of the bagel components **10, 11** are generally obtained, and particularly moisture content increases of about 15% to about 40% are obtained, after refrigerated storage of the sandwich **100** for about four months. Consistently, the water activity values of the bagel components **10, 11** also increase after several months of storage as compared to their original values measured before being brought into contact with the respective water-in-oil emulsion layers **12, 13,** and assembly of the sandwich **100**. In addition, the moisture content of the cream cheese layer **16** having higher water activity than bagel components **10, 11** is not used or needed as the source of the moisture supplied to the moisturized bagel components **10, 11.** Instead, the moisture supply emulsion layers **12, 13** serve that role and function for the bagel components **10, 11.** The moisture content of the cream cheese layer **16** is kept well preserved by the moisture barrier layers **14, 15** located on its opposing major faces **161, 162.** In this way, the cream cheese layer **16** can be maintained fresh without physical and/or organoleptic degradations occurring that otherwise are commonly associated with significant moisture losses that occur during storage.

For purposes herein, water activity (A_{w}) is an indicator of the available moisture in a food system. Available water is "free" or unbound such that it is available as a solvent for various water-soluble food components. Water activity is measured in terms of the equilibrium relative humidity proximate to the food system. The water activity represents the ratio of the water vapor pressure of the food to the water vapor pressure of pure water under the same conditions and is expressed as a fraction. A water activity scale extends from 0 (bone dry) to 1.0 (100% relative humidity). A number of electronic instruments operating on various measuring principles are commercially available for measuring water activity of food samples with adequate precision, repeatability, and reliability, which, if used properly, can be used to measure the water activity parameter for purposes of the present invention. Usually, water activity measuring instruments measure "equilibrium relative humidity" of a sample placed in a sealed enclosure after a suitable equilibration period. The two predominant general types of water activity measuring instruments are electrical sensors, which monitor humidity-induced changes in resistance or capacitance, and chilled mirror/dew point sensors.

In the present invention, each moisture release system provided in a food product between food components having differing water activities (A_{w}'s) includes a moisture reservoir constituent, such as embodied by a moisture supply emulsion layer **12**, that supplies moisture to one relatively lower A_{w} food component over time while effectively reducing A_{w} difference between the relatively lower A_{w} and higher A_{w} food components, which in turn decreases the driving force of moisture migration between the two food components, thereby reducing moisture loss from the food component having higher water activity otherwise due to migration between the components. At the same time, the moisture barrier constituent of the moisture release system, such as layer **14**, helps "seal" the moisture in the filling having higher water activity so that it remains moist and savory after storage.

Moisture is provided to the bagel component over a period of storage time in this manner by coating the inside of the bagel or outside of a moisture barrier-coated cream cheese slab with an emulsion containing an adequate amount of water. Water-in-oil (W/O) or oil-in-water-in-oil (O/W/O) emulsions are preferred in the practice of the present invention as water forms the internal phase in those emulsions. Encapsulated aqueous solutions may also work in certain applications.

In the present invention, for a given water-in-oil emulsion, if the water activity differential is relatively large as between two adjoining food components and/or the product shelf life is relatively long, the emulsion, when interposed, behaves like a "moisture reservoir" for the food component having lower water activity. On the other hand, if the water activity differential is relatively small and/or product shelf life is relatively short, the moisture driving force between the food components will be small enough that the water-in-oil emulsion will act more as a moisture barrier.

In this manner, the present invention uses an emulsion with an internal water phase to constantly supply moisture to the outer shell, such as a bagel, so it does not dry out and become too firm and/or hard during storage. That is, the emulsion layer **12** maintains bagel softness by providing moisture to the bagel **10** and by reducing the water-activity difference between the coated cheese **16** and the bagel **10**. During periods of storage, the emulsion coating increases the amount of moisture in the form of water in the bagel, as gradually delivered by the emulsion. This reduces the perception of staling by reducing bagel firmness during refrigerated storage as determined by sensory evaluation. This invention thus avoids the problems associated with spraying water to the surface of a bagel as the attempted mode of "moisturizing" it, which causes immediate and persisting sogginess on the bagel surface. In the present invention, the water contained in the emulsion layer **12** is released slowly and without causing sogginess, yet is effective at increasing bagel moisture. Moreover, the emulsion layer **12** can be used as a carrier for flavors or antimicrobial additives that can be dispersed or dissolved in the water phase of the emulsion. In the present invention, the filling texture is not effected by the moisturizing mechanism used because the emulsion layer used for the continuous release of moisture is not in contact with the inner filling.

Although the invention is illustrated herein in the form of a bagel and cream cheese sandwich, it will be appreciated that it has wider application encompassing virtually any multicomponent food product in which food component layers of different water activities are provided adjacent to each other. The principles of the invention are generally applicable to multi-component food products stored and handled under non-freezing temperatures, which, for example, can range from about 0°C to about 28°C, depending on the particular food. The multicomponent food product in which diverse food component layers of different water activities are provided adjacent to each other can include stack, a stack rolled into a cylindrical shape, one food component surrounded by other food component, and so forth. The diverse food component layers can alternate with each other one or more times. Preferably, the moisture release system is interposed between each set of facing sides of diverse food component layers with the moisture supply emulsion layer contacting the food component having relatively lower water activity while the moisture barrier is contacting the food component having the relatively higher water activity of the set Alternatively, the moisture release system could be placed between one or some, but not all, of the different pairings of diverse food components provided in a food product.

The moisture release system described herein is interposed between the diverse food component layers. For example, the food product may also be a cheese and cracker combination, a snack bar, a breakfast bar, a candy bar, and so forth.

In addition, although lower water activity layers **10** and **11** are represented as being exterior layers and the higher water activity layer **16** is represented as being an internal layer in the non-limiting food product illustrated in Fig. 1, it will be appreciated that the moisture release system **17** according to the present invention is not limited to those configurations. For instance, such as shown in FIG. 5, the invention also is applicable to food product arrangements **500** in which both a lower water activity layer and a higher water activity layer having facing sides separated by the moisture release system described herein while their respective opposite sides or faces are exposed. In another alternative, such as shown in FIG. 6, the invention also is applicable to food product arrangements **600** in which both a lower water activity layer and the higher water activity layers are internal layers in a food product having other food component layers **61** and **62** that are different from layers **10, 11** and **16**.

The most effective moisture barriers in food products are made of predominantly lipids, especially when the water activity differential between the high and the low A_{w} food components is large (e.g., >0.5). Addition of any hydrophilic substance into the barrier, however, reduces the effectiveness of the barrier in terms of preventing moisture migration. A W/O emulsion is, therefore, not an effective moisture barrier when the water activity differential is large and/or product shelf life is long (e.g., greater than about 2 months under refrigerated conditions). In this invention, an emulsion layer instead acts as a "controlled" moisture delivery system or "moisture reservoir" that releases the moisture into a low water activity component over time.

In one preferred embodiment, a water-in-oil emulsion (W/O) used as the moisture supply layer (MSL) constituent of the moisture release system has a composition of about 20 to about 80% water and about 80 to about 20% fat or fat and oil. For purposes herein, liquid fats are often referred to as oils.

The fat phase is about 50 to about 100% fat ingredient(s). The fat can be an animal fat or vegetable fat. The fat can be vegetable oils such as, for example, palm oil, palm kernel oil, cottonseed oil, canola oil, sunflower oil, soybean oil, peanut oil, com oil, safflower oil, olive oil, coconut oil, and mixtures thereof. It also can be or include animal fats such as beef tallow, butter, lard, and mixtures thereof. The fats also may be partially hydrogenated, such as hydrogenated soybean oil. In one preferred embodiment, the fat used is predominantly (i.e., 50% or more) comprised of one or more C₈ to C₁₈ saturated fatty acids; examples thereof include palm kernel oil, coconut oil, and some palm oils, butters, and beef tallow oils.

The water-in-oil emulsions include an emulsifier. Preferably, the emulsifier comprises a low hydrophile-lipophile balance (HLB). Low HLB emulsifiers have an HLB value of less than about 8. The low HLB emulsifier can be sorbitan esters, polyglycerol esters, sugar esters, modified or unmodified monoglycerides, mono- and diglyceride blends, propylene glycol fatty acid esters, lecithin, and the like. The low HLB emulsifier is generally included in the emulsion in an amount of about 1 to about 5% by weight.

As the emulsifier additive, the low HLB emulsifier can be used alone, or in combination with a high HLB emulsifier (HLB greater than about 10). If used in combination, the low HLB emulsifier/high HLB emulsifier addition ratio preferably is about 8 to about 10:1, respectively. The emulsifier(s) can be dispersed in both the continuous and dispersed phases of the emulsion, or in either phase.

The water-in-oil emulsions preferably comprise a stabilizer. The stabilizer is suitable for use to control water mobility, increasing plasticity of the emulsion, and the like. Preferably, the stabilizer is an edible hydrophilic colloid, such as a starch; a gum, such as xanthan gum, gellan gum, carrageenan, gum arabic, locust bean gum, guar gum, tara gum, gum tragacanth, and the like; a chemically modified polysaccharide, such as chemically modified celluloses like methyl cellulose, methyl ethyl cellulose, 2-hydroxyethyl methylcellulose, carboxymethyl cellulose, and the like; individually or in a combination thereof. The stabilizer is generally included in the emulsion in an amount of about 0.1 to about 1.5%, on a solids basis for that component

The aqueous phase of the emulsion may optionally include components such as sweeteners, dairy ingredients, edible acids, fruit concentrates or juices, and so forth, so long as they do not adversely affect the functional character of the moisture delivery system or the organoleptic properties of the food product. Likewise, other additives can be present in the water-in-oil emulsion such as flavoring agents, coloring agents, fat crystal retarding agents, salt, mold inhibitors such as potassium sorbate, sodium benzoate and so forth, whiteners such as titanium dioxide, sequestering agents, such as alkali metal pyrophosphate used to control levels of ionic metal species, acidulants, buffers, food acids, preservatives, antioxidants, vitamins, minerals, nutraceuticals, and the like.

The emulsion composition may be prepared by mixing or blending in any convenient order the water, fats, emulsifier, stabilizer and other additives in such a manner (e.g., using a,homogenizer) as to achieve a uniform blend. Generally, the emulsion composition ingredients are blended at a temperature of about 5 to about 10°C above the melting point of the fat for about 1 to about 2 minutes to achieve the desired emulsion.

In one exemplary formulation, the fat phase is prepared by adding a low HLB emulsifier to the fat. The aqueous phase is prepared by combining the water and stabilizer to form a dispersion. The water can be at room temperature or heated to approximately the same temperature as the fat phase. The aqueous phase is then generally blended into the fat phase until an emulsion is achieved. Flavorings, and other optional additives, can be added to the emulsion with high shear agitation until the mixture is thoroughly dispersed and a relatively uniform blend is achieved. For example, the shear associated with the emulsion preparation can be equivalent to pressures of about 500 to about 25,000 psi. Alternatively, the optional ingredients can be pre-blended with the fat prior to preparation of the fat phase as described herein. If a fat ingredient has a high solid fat content at room temperature, the fat should be sufficiently heated to permit its thorough blending with any lower solid fat ingredients and other additives incorporated into the fat phase.

In one aspect, the prepared moisture supply emulsion layer of the moisture release system is applied to the inside part of bagel or other low A_{w} food product after baking. Alternatively, the emulsion may be applied to a moisture barrier already coated upon the other food component of higher water activity such as a cream cheese layer. The moisture supply emulsion layer can be applied by any convenient technique to provide a thin generally uniform layer. Suitable techniques include, for example, brushing, dipping, spraying, pan coating, and use of a fluidized bed. The moisture supply emulsion layer should be sufficiently thick so as to contain sufficient moisture to allow the desired moisture transfer, thereby preventing the low water activity component form staling. Generally, the moisture supply emulsion layer is applied to the food component to form an essentially continues barrier layer at least about 100 microns thick, preferably about 150 to about 2000 microns thick, and more preferably about 500 to about 1000 microns thick.

Generally, the moisture barrier compositions used in the practice of this invention comprises an edible lipid or oil. Additionally, a high melting lipid and/or fat crystal growth retarding agent can be used. Fat crystal growth retarding agents, which are typically lipids, tend to retard the crystal gowth of the fat within the moisture barrier composition. Although not wishing to be limited by theory, it appears that the moisture barrier efficiency is increased by keeping the average particle size of the fat particles within the moisture barrier composition relatively small (i.e., about 200 microns or less). In one particular embodiment, the moisture barrier film comprises (1) about 60 to about 100 percent of an edible, low melting lipid (i.e., a lipid having a melting point of about 35°C or lower and preferably about 15 to about 30° C), (2) about 0 to about 40 percent of an edible, high melting fat (i.e., a fat having a melting point of about 35°C or higher and preferably about 37 to about 70°C), and (3) about 0.02 to about 0.5% fat crystal growth retarding agent. In one embodiment, the fat crystal growth retarding agent comprises the low HLB emulsifiers described above, and can be, for example, a diglycerol or triglycerol monoleate emulsifier. Other suitable fat crystal growth retarding agents include, for example, polyglycerol esters, sorbitan tirstearate, and the like.

Suitable edible, low melting oils generally include hydrogenated or non-hydrogenated oils having the desired melting points. Suitable edible, low melting oils include natural or partially hydrogenated vegetable or animal oils including, for example, coconut oil, palm kernel oil, palm oil, rapeseed oil, soybean oil, palm oil, sunflower oil, com oil, canola oil, cottonseed oil, peanut oil, cocoa butter, anhydrous milk-fat, lard, beef fat, and the like, as well as mixtures thereof. Preferred edible, low melting oils include coconut oil, palm kernel oil, canola oil, and mixtures thereof.

Suitable edible, high melting lipids generally include edible long chain fatty acids, their monoglycerides, diglycerides, and triglycerides, their alkaline metal salts, and other derivatives thereof (e.g., high melting sucrose polyesters). Generally, the edible, high melting lipids are formed from long chain fatty acids having at least about 16 carbon atoms and preferably about 18 to about 26 carbon atoms; preferably, the long chain fatty acids are saturated. Suitable saturated long chain fatty acids used to form the edible, high melting lipids include, for example, stearic acid, arachidic acid, behenic acid, linoceric acid, and the like; their derivatives, including, for example, glycerol monostearate, glycerol distearate, glycerol tristerate, calcium stearate, magnesium stearate, high melting sucrose polyesters, high melting fatty alcohols, high melting waxes, and the like, as well as mixtures thereof.

The moisture barrier can be applied using any suitable technique. The moisture barrier can be applied to the moisture release layer or the higher A_{w} food component such that it contacts the moisture release layer in the final product. The moisture barrier can be applied by immersion of the surface thereof to be coated, into a melted or molten moisture barrier composition, removing the food product, and allowing the coated product to cool. In another embodiment of the invention, the moisture barrier coating can be applied by brushing or otherwise applying the moisture barrier composition to the desired surface(s) of the product. Suitable techniques include, for example, dipping, pan coating, and use of a fluidized bed. In still another practice of the invention, the film can be applied using a spray, including atomized spray, air-brushing, and the like.

Generally, the edible moisture barrier is applied to form an essentially continues barrier layer at least about 10 microns thick, preferably about 20 to about 2000 microns thick, and more preferably about 50 to about 750 microns thick.

The edible moisture barrier can be, but need not be, oven stable. In one embodiment, the moisture barrier can be an acetylated monoglyceride, e.g., Myvacet 7-07, having a melting point of about 37 to about 40°C, and applied at a thickness of about 500 microns, as long as the food product is not post-baked after assembly.

The moisture release layer and edible moisture barrier used in the present invention should have acceptable organoleptic properties, for example, taste, aftertaste, and mouthfeel of the moisture supply layer and moisture barrier preferably are imperceptible such that the consumer is unaware of the presence of the layers when the product is consumed. Preferably, the edible moisture barrier is rapid and clean melting, is free from residues, and has a creamy (i.e., smooth), non-waxy appearance and mouthfeel. Additionally, the edible moisture barrier composition preferably possesses a stable crystalline structure, which resists the tendency to bloom or crack and provides good stability against thermal abuse (e.g., temperature recycling between about 5 and about 80°C).

In these food products, an edible moisture supply layer is provided adjacent to the food component for which it is desired to supply moisture during the shelf life of the food product, wherein that food component has a lower water activity than another food component in the product. In addition, migration of moisture from the component having higher water activity to the component having lower water activity is prevented by an intervening moisture barrier provided in contact with the component having higher water activity.

The following examples further illustrate the present invention and are not intended to limit it. All parts, percentages, amounts, and ratios are given by weight herein unless otherwise indicated.

**Example 1.** A shelf life study was performed on bagel and cream cheese sandwiches to investigate the effects of the dual moisture delivery/moisture migration control sub-structure of the present invention as compared to sandwiches used without that substructure or with only the moisture barrier. The following sandwiches were prepared.

**Control (C) (Aged):** This sample was prepared without either a lipid-based barrier on cream cheese or a water supply emulsion layer. Pre-sliced bagels purchased from the refrigerated section of the local grocery store were used to make the bagel and cream cheese sandwiches. For this control sandwich, cream cheese (Philadelphia® Cream Cheese, sliced from 3 lb. foodservice brick, 45 g) was directly sandwiched in physical contact with the inner sides of a sliced bagel. No moisture barrier coating or emulsion was interposed between the bagel and cream cheese. The sample was an aged control for purposes of this study as its properties were measured at several shelf life intervals for comparison purposes.

**Comparison (Edible Moisture Barrier (EMB) only):** This sample was prepared with a lipid-based barrier on cream cheese but without a water supply emulsion layer. These sandwiches were prepared with the same types of bagel and cream cheese components as the Control, but the cream cheese layer was coated with a lipid-based moisture barrier, i.e., Emulsion A below. Approximately 6.25 g of barrier coating was applied evenly through spraying and dipping on to both sides of a 45g cream cheese slice.

**W/O Emulsion A: Lipid-Based Moisture Barrier**

| **Ingredient** | **%** |
|---|---|
| Coconut Palm Kernel Oil | 72.15 |
| Canola Oil | 27.75 |
| Di/triglycerol Monoleate | 0.10 |
| **Total** | **100.0** |

**Inventive Moisture Release System (MRS):** This inventive example was prepared with a lipid-based barrier on cream cheese and an water-in-oil (W/O) emulsion applied to an inside surface of the a bagel. These sandwiches had the same types of cream cheese, bagel, and moisture barrier components as the Comparison sandwiches but additionally included a W/O emulsion as a moisture supply layer (MSL, i.e., Emulsion B), sprayed onto the inside surface of each cut bagel before being assembled with the cream cheese slice having the lipid-based barrier provided on each side thereof. In this respect, approximately 6.25 g of W/O Emulsion B (about 60% water and about 40% oil) was applied as a generally uniform coating to each cut surface of the bagel. FIG. 1 shows the general assembly of components for this example.

**W/O Emulsion B: Moisture Supply Layer**

| **Ingredient** | **%** |
|---|---|
| Coconut Palm Kernel Oil | 38.9 |
| Sorbitan Monostearate | 1.0 |
| Cultured Cream Flavor | 0.1 |
| Xanthan Solution, 1% | 59.5 |
| Potassium Sorbate | 0.5 |
| **Total** | **100.0** |

The results reported in the following Tables 1-4 were obtained as the average of measurements made on the two separate samples of each type of sandwich at the indicated time intervals.

After assembly, the sandwiches were promptly MAP packaged and placed under refrigerated storage conditions at about 4°C without any intervening heating or baking steps. The moisture levels (%) and water activities of the cream cheese and bagel components of these various sample products were measured at the time of assembly and then at monthly intervals over a refrigerated storage period of 4 months. The cream cheese acidity (%) also was measured.

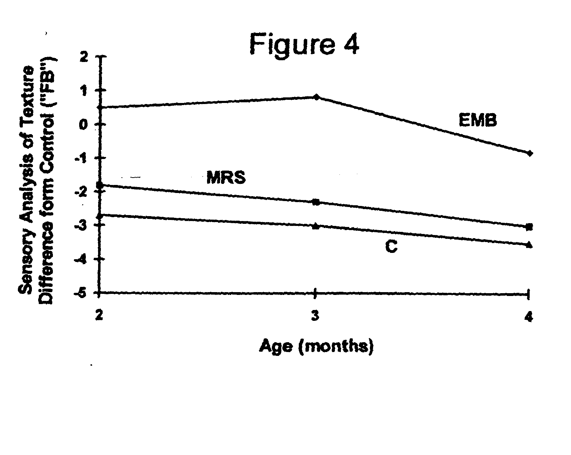

In addition, the staleness of the samples were measured at several shelf life intervals using sensory analysis of texture. A fresh bagel "FB" was used as the control for these firmness comparisons. Samples that were harder or firmer than the fresh control received positive scores, while samples that were softer received negative scores. The scores were relative. The results of these sensory tests are shown in FIG. 4. Sensory evaluations were also performed on the samples to assess their organoleptic properties of texture, flavor, odor and color at several different shelf life intervals. Fresh samples of the food products were used as controls for these sensory evaluations.

**Table 1: Moisture (%), Ave., of Bagel Component**

| Time (months) | Control Product C | Comparison Product EMB | Inventive Product MRS |
|---|---|---|---|
| 0 | 35.4 | 35.4 | 35.4 |
| 1 | 47.0 | 37.5 | 42.4 |
| 2 | 46.8 | 38.6 | 43.6 |
| 3 | 46.6 | 38.3 | 43.9 |
| 4 | 46.9 | 40.4 | 45.5 |

**Table 2: Moisture (%), Ave., of Cream Cheese Component**

| Time (months) | Control Product C | Comparison Product EMB | Inventive Product MRS |
|---|---|---|---|
| 0 | 53.8 | 53.8 | 53.8 |
| 1 | 35.3 | 51.1 | 48.9 |
| 2 | 32.4 | 49.5 | 45.7 |
| 3 | 32.1 | 49.3 | 44.9 |
| 4 | 30.4 | 46.8 | 43.2 |

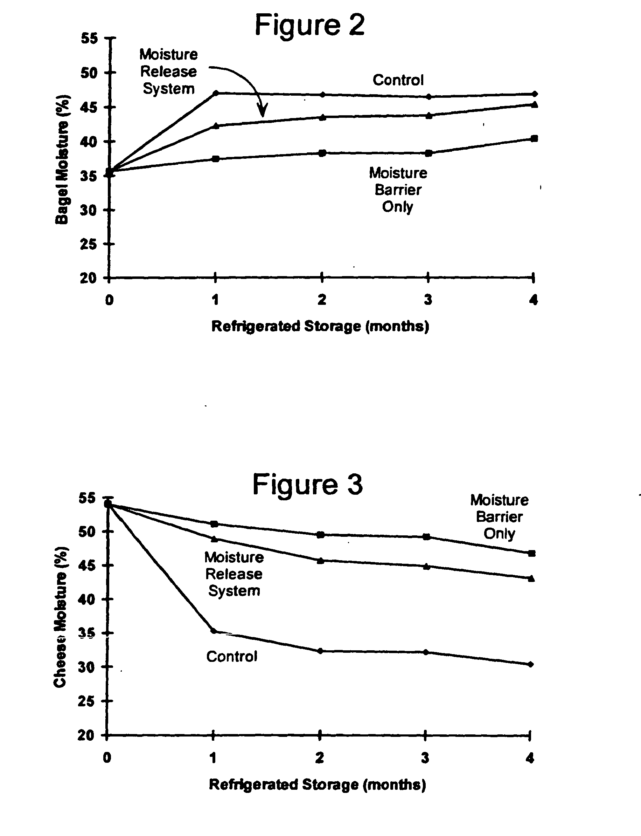

FIG. 2 graphically illustrates the data of Table 1, while FIG. 3 graphically illustrates the data of Table 2. As shown by these figures, the bagel moisture level in the inventive example ("MRS"), with its data points plotted as "▲", increased significantly during refrigerated storage without any significant concomitant losses of moisture occurring in the cream cheese layer. It was the only type of sandwich sample to achieve this dual functionality.

In particular, as seen from the results, the initial moisture content of the tested bagel components was about 35%, which after four months of refrigerated storage was increased to about 40% in the comparison bagel and cream cheese sandwich "EMB" including the moisture barrier alone. The inventive bagel and cream cheese sandwich "MRS" sample including the emulsion layer and moisture barrier experienced an increased moisture content in the bagel component to about 45% after four months refrigerated shelf-life. As a result, inventive sample "MRS" had not become stale during storage. In addition, this moisture increase was accomplished without any negative taste attributes being observed in any of the components of the inventive sample "EMB" after four months of storage.

On the other hand, the bagel moisture content increased significantly in the control sample "C", with its data points plotted as "◆" in FIGs. 2-3, that included neither the moisture barrier or moisture supply emulsion layer. Those increases came at the expense of a large decrease in moisture content of the cream cheese layer over this period.

Referring to FIG. 4, bagel firmness decreased as product shelf life increased for each of the three types of tested sandwiches. Staling is often measured through firmness of a baked good. As shown by FIG. 4, the bagel component of the control "C" had a bagel firmness that showed the greatest departure from the fresh control when measured at several shelf life intervals.

In addition, the cream cheese layer of the control sandwich "C" was noticeably less fresh from an organoleptic standpoint than example "MRS" representing the invention after one or months of shelf life.

The comparison sample "EMB" that included only the moisture barrier layer, which has its data points plotted as "■" in FIGs. 2-3, retained the moisture level of the cream cheese level fairly well. The moisture level in the bagel of sample "EMB", however, did not increase as significantly, especially relative to that observed in the inventive example "MRS", such that it was less moist

**Table 3: Water Activity (Aw), Ave., of Cream Choose Component**

| Time (months) | Control Product C | Comparison Product EMB | Inventive Product MRS |
|---|---|---|---|
| 0 | 0.999 | 0.999 | 0.999 |
| 1 | 0.975 | 0.991 | 0.994 |
| 2 | 0.975 | 0.996 | 0.987 |
| 3 | 0.975 | 0.992 | 0.992 |
| 4 | 0.967 | 0.991 | 0.982 |

**Table 4: Water activity (Aw). Ave., of Bagel Component**

| Time (months) | Control Product C | Comparison Product EMB | Inventive Product MRS |
|---|---|---|---|
| 0 | 0.946 | 0.946 | 0.946 |
| 1 | 0.973 | 0.954 | 0.970 |
| 2 | 0.976 | 0.957 | 0.968 |
| 3 | 0.976 | 0.960 | 0.975 |
| 4 | 0.971 | 0.960 | 0.972 |

As shown in Table 4, the water activities for the bagels from a barrier-coated cream cheese sandwich "EMB" and a barrier-coated, emulsion-containing inventive sandwich "MRS" were 0.960 and 0.972, respectively, after 4 months refrigerated storage. The sandwich "MRS" representing the present invention had the bagel component with the highest water activity after four months of refrigerated shelf life.

As shown by these examples, the uniqueness of the current invention stems from the use in combination of a water-in-oil emulsion and the effective edible moisture barrier. The effective edible moisture barrier prevents moisture loss from the filling, whereas the water-in-oil emulsion supplies necessary moisture to the bagel during shelf life of the product to make the bagel softer. As a result, the present invention provides an effective method of maintaining the quality of both high and low water activity components, and therefore overall product quality.

Although illustrated in a bagel and cream cheese sandwich in the above example, it will be appreciated that the present invention is not limited thereto. The present invention has wide applicability to multi-component food products in which components having different water activities are included and may be subjected to inter-migration of moisture between different components through the food product. The present invention stabilizes such food products by providing an ancillary layer to supply moisture to a food component having less initial moisture content that is more subject to staling while protecting a higher moisture containing food component from moisture loss with a moisture barrier layer.

Multi-component food components of this type include, for example, food products having a bread component, a cracker, or a cookie or other type of confectionary shell, as a lower moisture content (i.e., low water activity A_{w}) shell or substrate used to support a filling or spread having a higher moisture content. Bread components include, for example, a bagel slice, a loaf bread slice, a muffin, a croissant slice, a pizza crust, or a pizza bread. The cracker can be, for example, a cheese-flavored cracker, a wheat cracker, and so forth. Commercial brands of useful crackers, include, for example, Ritz® crackers, Triscuit® crackers, and so forth. The higher moisture content (i.e., high water activity A_{w}) spreadable coating or filling may contain cream cheese, cheese spread, tomato sauce-containing spread, jam, jelly, fruit spread, fruit-containing emulsion, cookie filling, frosting, yogurt, sour cream, and so forth.

## Claims

1. A food product comprising a high water activity food component, a low water activity food component, and a controlled moisture release system, wherein the moisture release system comprises:
(a) a controlled moisture supply layer comprising an edible emulsion layer having water as an internal phase, wherein the controlled moisture supply layer contacts the low water activity food component, and
(b) an edible moisture barrier layer, wherein the edible moisture barrier contacts the high water activity food component ;
wherein the controlled moisture supply layer allows migration of moisture into the low water activity food component during storage of the food product, thereby reducing staling of the low water activity food component, and wherein the edible moisture barrier layer reduces migration of moisture from the high water activity food component, whereby the moisture release system provides an extended shelf life for the food product relative to a similar food product without the moisture release system.

2. The food product of claim 1, wherein the edible emulsion layer comprises an emulsion selected from a water-in-oil or an oil-in-water-in-oil emulsion.

3. The food product of Claim 1 or 2, wherein the edible emulsion layer comprises about 20 to about 80% water and about 80 to about 20% fat.

4. The food product of any one of Claims 1 to 3, wherein the edible emulsion layer includes a fat phase comprising C₈ to C₁₈ saturated fatty acid.

5. The food product of any one of Claims 1 to 4, wherein the moisture barrier including an edible lipid, an edible low melting oil, and a fat crystal growth retarding agent.

6. The food product of any one of Claims 1 to 5, wherein the emulsion has an average emulsion particle size of less than about 200 microns.

7. The food product of any one of Claims 1 to 6, wherein moisture content of the low water activity food component increases at least 15% when the food product is stored for about four months at about 4°C.

8. The food product of any one of Claims 1 to 6, wherein the moisture content of the low water activity food component increases about 15% to about 40% when the food product is stored for about four months at about 4°C.

9. The food product of any one of Claims 1 to 8, wherein the high water activity food component has a water activity that is at least about 0.03 greater than the water activity of the low water activity food component when the low water activity food component, moisture release layer, moisture barrier layer, and high water activity food component are brought together.

10. The food product of any one of Claims to 9, further including a second edible moisture barrier layer contacting an opposite side of the high water activity food component, and a second controlled moisture supply layer comprising another edible emulsion layer having water as an internal phase that contacts another low water activity food component.

11. The food product of any one of Claims 1 to 10, , wherein the food product is a bagel and cream cheese sandwich.

12. The food product of any one of Claims 1 to 10, wherein the food product is a cheese filled cracker.

13. The food product of any one of Claims 1 to 10, wherein the food product is a cookie.

14. The food product of any one of Claims 1 to 10, wherein the food product is a snack bar or a nutritional bar.

15. The food product of any one of Claims 1 to 10, wherein the low water activity food component comprises a bread material selected from a bagel slice, a loafed bread slice, a muffin, a croissant slice, a pizza crust, or a pizza bread.

16. The food product of any one of Claims 1 to 10 or Claim 15, wherein the high water activity food component comprises from cream cheese cheese spread, tomato sauce-containing spread, jam, jelly, fruit spread, fruit-containing emulsion, cookie filling, frosting, yogurt, and sour cream.

## Patentansprüche

1. Lebensmittelprodukt mit einem Lebensmittelbestandteil hoher Wasseraktivität, einem Lebensmittelbestandteil geringer Wasseraktivität und einem System zur kontrollierten Feuchtigkeitsfreigabe, wobei das Feuchtigkeitsfreigabesystem umfaßt:
(a) eine Schicht zur kontrollierten Feuchtigkeitszufuhr bestehend aus einer essbaren Emulsionsschicht mit Wasser als innerer Phase, wobei die Schicht zur kontrollierten Feuchtigkeitszufuhr mit dem Lebensmittelbestandteil geringer Wasseraktivität in Berührung ist, und
(b) eine essbare Feuchtigkeitssperrschicht, die mit dem Lebensmittelbestandteil hoher Wasseraktivität in Berührung ist,
wobei die Schicht zur kontrollierten Feuchtigkeitszufuhr während der Lagerung des Lebensmittelprodukts eine Feuchtigkeitswanderung in den Lebensmittelbestandteil geringer Wasseraktivität erlaubt und dadurch die Austrocknung des Lebensmittelbestandteils geringer Wasseraktivität reduziert, und wobei die essbare Feuchtigkeitssperrschicht die Feuchtigkeitswanderung aus dem Lebensmittelbestandteil hoher Wasseraktivität reduziert, wodurch das Feuchtigkeitsfreigabesystem für das Lebensmittelprodukt im Verhältnis zu einem gleichen Lebensmittelprodukt ohne das Feuchtigkeitsfreigabesystem eine verlängerte Haltbarkeit schafft.

2. Lebensmittelprodukt des Anspruchs 1, bei dem die essbare Emulsionsschicht eine Emulsion aufweist, die unter einer Wasser-in-Öl- oder einer Öl-in-Wasser-in-Öl-Emulsion ausgewählt ist.

3. Lebensmittelprodukt des Anspruchs 1 oder 2, bei dem die essbare Emulsionsschicht etwa 20 bis etwa 80 % Wasser und etwa 80 bis etwa 20 % Fett aufweist.

4. Lebensmittelprodukt eines der Ansprüche 1 bis 3, bei dem die essbare Emulsionsschicht eine Fettphase enthält, die gesättigte C₈- bis C₁₈-Fettsäuren enthält.

5. Lebensmittelprodukt eines der Ansprüche 1 bis 4, bei dem die Feuchtigkeitssperre ein essbares Lipid, ein essbares, niedrig schmelzendes Öl und einen Fettkristall-Wachstumsverzögerer enthält.

6. Lebensmittelprodukt eines der Ansprüche 1 bis 5, bei dem die Emulsion eine mittlere Emulsionsteilchengröße von weniger als etwa 200 Mikron hat.

7. Lebensmittelprodukt eines der Ansprüche 1 bis 6, bei dem der Feuchtigkeitsgehalt des Lebensmittelbestandteils geringer Wasseraktivität wenigstens 15% ansteigt, wenn das Lebensmittelprodukt etwa vier Monate bei etwa 4 °C gelagert wird.

8. Lebensmittelprodukt eines der Ansprüche 1 bis 6, bei dem der Feuchtigkeitsgehalt des Lebensmittelbestandteils geringer Wasseraktivität etwa 15% bis etwa 40% ansteigt, wenn das Lebensmittelprodukt etwa vier Monate bei etwa 4 °C gelagert wird.

9. Lebensmittelprodukt eines der Ansprüche 1 bis 8, bei dem der Lebensmittelbestandteil hoher Wasseraktivität eine Wasseraktivität hat, die wenigstens etwa 0,03 größer als die Wasseraktivität des Lebensmittelbestandteils geringer Wasseraktivität ist, wenn der Lebensmittelbestandteil geringer Wasseraktivität, die Feuchtigkeitsfreigabeschicht, die Feuchtigkeitssperrschicht und der Lebensmittelbest-andteil hoher Wasseraktivität zusammengebracht werden.

10. Lebensmittelprodukt eines der Ansprüche 1 bis 9, ferner mit einer zweiten essbaren Feuchtigkeitssperrschicht, die mit einer entgegengesetzten Seite des Lebensmittelbestandteils hoher Wasseraktivität in Berührung ist, und einer zweiten Schicht zur kontrollierten Feuchtigkeitszufuhr, die eine andere essbare Emulsionsschicht mit Wasser als innere Phase aufweist und mit einem anderen Lebensmittel bestandteil geringer Wasseraktivität in Berührung ist.

11. Lebensmittel produkt eines der Ansprüche 1 bis 10, bei dem das Lebensmittelprodukt ein Bagel und Weichkäsesandwich ist.

12. Lebensmittelprodukt eines der Ansprüche 1 bis 10, bei dem das Lebensmittelprodukt ein mit Käse gefüllter Zwieback ist.

13. Lebensmittelprodukt eines der Ansprüche 1 bis 10, bei dem das Lebensmittelprodukt ein Keks ist.

14. Lebensmittelprodukt eines der Ansprüche 1 bis 10, bei dem das Lebensmittelprodukt ein Imbissriegel oder ein Nahrungsriegel ist.

15. Lebensmittelprodukt eines der Ansprüche 1 bis 10, bei dem der Lebensmittelbestandteil geringer Wasseraktivität ein Brotmaterialumfaßt, das unter einer Bagelscheibe, einer Brotlaibscheibe, einem Muffin, einer Croissantscheibe, einem Pizzabackwerk oder einem Pizzabrot ausgewählt ist.

16. Lebensmittelprodukt eines der Ansprüche 1 bis 10 oder 15, bei dem der Lebensmittelbestandteil hoher Wasseraktivität ein streichfähiges Material umfaßt, das unter Schmelzkäse, Käseaufstrich, Tomatensauce enthaltendem Aufstrich, Marmelade, Gelee, Fruchtaufstrich, fruchthaltiger Emulsion, Keksfüllung, Zuckerglasur, Joghurt und Sauerrahm ausgewählt ist.

## Revendications

1. Produit alimentaire comprenant un composant alimentaire à forte affinité d'eau, un composant alimentaire à faible affinité d'eau et un système de libération contrôlée d'humidité, dans lequel le système de libération d'humidité comprend :
(a) une couche d'apport contrôlé d'humidité comprenant une couche d'émulsion comestible ayant de l'eau comme phase interne, la couche d'apport d'humidité contrôlée étant au contact du composant alimentaire à faible affinité d'eau, et
(b) une couche barrière d'humidité comestible, la barrière d'humidité comestible étant au contact du composant alimentaire à forte affinité d'eau,
dans lequel la couche d'apport contrôlé d'humidité permet la migration de l'humidité dans le composant alimentaire à faible affinité d'eau pendant le stockage du produit alimentaire, réduisant ainsi le desséchement du composant alimentaire à faible affinité d'eau et dans lequel la couche barrière d'humidité comestible réduit la migration de l'humidité du composant alimentaire à forte affinité d'eau, ce grâce à quoi le système de libération d'humidité procure une durée de conservation prolongée au produit alimentaire par rapport à un produit alimentaire analogue dépourvu de système de libération d'humidité.

2. Produit alimentaire selon la revendication 1, dans lequel la couche d'émulsion comestible comprend une émulsion choisie parmi une émulsion eau dans l'huile ou une émulsion huile dans l'eau dans l'huile.

3. Produit alimentaire selon la revendication 1 ou 2, dans lequel la couche d'émulsion comestible comprend d'environ 20 à environ 80 % d'eau et d'environ 80 à environ 20 % de graisse.

4. Produit alimentaire selon l'une quelconque des revendications 1 à 3, dans lequel la couche d'émulsion comestible comprend une phase de graisse comportant un acide gras saturé en C₈ à C₁₈.

5. Produit alimentaire selon l'une quelconque des revendications 1 à 4, dans lequel la barrière d'humidité comprend un liquide comestible, une huile à bas point de fusion comestible et un agent retardant la croissance de cristaux de graisse.

6. Produit alimentaire selon l'une quelconque des revendications 1 à 5, dans lequel l'émulsion a une dimension moyenne de particule d'émulsion inférieure à environ 200 microns.

7. Produit alimentaire selon l'une quelconque des revendications 1 à 6, dans lequel la teneur en humidité du composant alimentaire à faible affinité d'eau augmente d'au moins 15 % quand le produit alimentaire est stocké pendant environ quatre mois à environ 4° C.

8. Produit alimentaire selon l'une quelconque des revendications 1 à 6, dans lequel la teneur en humidité du composant alimentaire à faible affinité d'eau augmente d'environ 15 % à environ 40 % quand le produit alimentaire est stocké pendant environ quatre mois à environ 4° C.

9. Produit alimentaire selon l'une quelconque des revendications 1 à 8, dans lequel le composant alimentaire à forte affinité d'eau a une affinité d'eau qui est au moins environ 0,03 fois supérieure à l'affinité d'eau du composant alimentaire à faible affinité d'eau quand le composant alimentaire à faible affinité d'eau, la couche de libération d'humidité, la couche barrière d'humidité et le composant alimentaire à forte affinité d'eau sont assemblés.

10. Produit alimentaire selon l'une quelconque des revendications 1 à 9, comprenant, en outre, une deuxième couche barrière d'humidité comestible en contact avec un côté opposé du composant alimentaire à forte affinité d'eau et une deuxième couche d'apport contrôlé d'humidité comprenant une autre couche d'émulsion comestible ayant de l'eau comme phase interne qui est au contact d'un autre composant alimentaire à faible affinité d'eau.

11. Produit alimentaire selon l'une quelconque des revendications 1 à 10, dans lequel le produit alimentaire est un petit pain en couronne et un sandwich à la crème de fromage.

12. Produit alimentaire selon l'une quelconque des revendications 1 à 10, dans lequel le produit alimentaire est un biscuit salé rempli de fromage.

13. Produit alimentaire selon l'une quelconque des revendications 1 à 10, dans lequel le produit alimentaire est un biscuit.

14. Produit alimentaire selon l'une quelconque des revendications 1 à 10, dans lequel le produit alimentaire est une barre d'en-cas ou une barre nutritionnelle.

15. Produit alimentaire selon l'une quelconque des revendications 1 à 10, dans lequel le composant alimentaire à faible affinité d'eau comprend un pain choisi parmi une tranche de petit pain en couronne, une tranche de pain, un petit pain plat et rond, une tranche de croissant, un fond de pizza ou une pâte de pizza.

16. Produit alimentaire selon l'une quelconque des revendications 1 à 10 ou la revendication 15, dans lequel le composant alimentaire à forte affinité d'eau comprend un matériau pouvant être étalé, choisi parmi une crème de fromage, une pâte de fromage à étaler, une pâte à étaler renfermant de la sauce tomate, de la confiture, de la gelée, une pâte de fruits à étaler, une émulsion renfermant des fruits, un remplissage de biscuit, un glaçage, un yogourt et de la crème fraîche.
